# EUROPÄISCHE PATENTANMELDUNG

(11) **EP 4 194 120 A1**
(43) Veröffentlichungstag der Anmeldung: **14.06.2023**
(21) Anmeldenummer: 22000073.1
(22) Anmeldetag: 23.03.2022
(51) Int. Cl.: B22D 17/20, B29C 45/83

(54) **DRUCKGUSSVORRICHTUNG**

(30) Priorität: 07.12.2021 DE 102021006029
(71) Anmelder: Wieland-Werke AG, 89079 Ulm (DE)
(72) Erfinder: VIDA, Gabriel, 72555 Metzingen (DE)

(57) **Zusammenfassung**

Die Erfindung betrifft eine Druckgussvorrichtung mit einer Füllkammer und einem Druckgießkolben mit Kolbenstange, welche verschiebbar in der Füllkammer angeordnet sind, wobei die Kolbenstange und der Druckgießkolben eine Schmiereinrichtung mit zumindest einem Druckluftkanal und zumindest einem Schmiermittelkanal aufweisen, über den Schmiermittel zum Druckgießkolben befördert werden kann, wobei der Druckgießkolben um den Außenumfang mehrere Schmieröffnungen aufweist, über die in einen zwischen der Außenoberfläche des Druckgießkolbens und der Innenoberfläche der Füllkammer befindlichen Bereich Schmiermittel eingebracht werden kann. Des Weiteren umfasst die Druckgussvorrichtung ein Schmiermittelversorgungssystem, welches Schmiermittel bereitstellt. Die Schmieröffnungen im Druckgießkolben sind als Schmierdüsen mit einem Abstrahlwinkel α ausgebildet. Der Neigungswinkel β der Symmetrieachse des Sprühstrahls einer Schmierdüse beträgt für das Schmiermittel relativ zur Kolbenlängsachse zwischen 30° und 85°.

## Beschreibung

Die Erfindung betrifft eine Druckgussvorrichtung gemäß dem Oberbegriff des Anspruchs 1.

Druckgussmaschinen weisen bekanntlich eine Füllkammer mit einem darin verschiebbar angeordneten Druckgießkolben auf. Durch Verschieben des Kolbens wird flüssiges Gussmaterial von der Füllkammer in die Druckgussform eingebracht. Im regulären Betrieb muss der Druckgießkolben bei jedem "Schuss" mit einem Schmiermittel geschmiert werden, um den Verschleiß des Kolbens und der Füllkammerinnenwand zu minimieren. Eine Schmierung erfolgt durch eine Einrichtung hinter dem Druckgießkolben am stirnseitigen Ende der Kolbenstange. Bislang wurde für die verschleißreduzierende Schmierung eine gewisse Schmiermittelmenge benötigt. Die Steuerung und Überwachung des Schmiermittelverbrauchs spielt eine zunehmende Rolle, da eine Überdosierung von Schmiermittel unwirtschaftlich und auch ökologisch nicht sinnvoll ist und die Gussqualität wesentlich beeinflusst.

Neue Lösungen zur Reduzierung des Schmiermittelverbrauchs werden in der DE 10 2009 034 505 A1 beschrieben. In dieser Druckschrift wird eine Schmiereinrichtung offenbart, über die Schmierflüssigkeit zwischen einem Kolben und der Innenwandung der Füllkammer eingebracht wird. Hierzu ist eine Schmierflüssigkeitspumpe vorgesehen, welche die Schmierflüssigkeit von einem Reservoir zur Schmiereinrichtung pumpt. Bei der beschriebenen Lösung handelt es sich bei der Schmierflüssigkeitspumpe um eine Hubkolbenpumpe oder um eine Zahnradpumpe. Mit einer Hubkolbenpumpe oder einer Zahnradpumpe ist eine relativ exakte und gleichbleibende Dosierung der Schmiermittelmenge pro Schuss möglich. Diese Pumpensysteme weisen eine geringe Streuung des von ihnen geförderten Schmiermittelvolumenstroms auf. Am Schmiermittelreservoir ist eine Messeinrichtung angeordnet, mit der feststellbar ist, welche Menge an Schmierflüssigkeit während eines Gießzyklus in die Druckgussvorrichtung gepumpt wird.

Eine Weiterentwicklung zur Reduktion der Schmiermittelmenge ist aus der Druckschrift DE 10 2012 025 447 B4 bekannt. Beschrieben ist eine Druckgussvorrichtung mit einer Füllkammer und einem Druckgießkolben mit Kolbenstange, welche verschiebbar in der Füllkammer angeordnet sind, wobei die Kolbenstange eine Schmiereinrichtung mit zumindest einem Schmiermittelkanal und zumindest einer Schmieröffnung aufweist, über die Schmiermittel in einen zwischen dem Außenumfang des Druckgießkolbens und einem Innenumfang der Füllkammer befindlichen Bereich eingebracht werden kann. Des Weiteren umfasst die Druckgussvorrichtung ein Schmiermittelversorgungssystem, welches Schmierflüssigkeit von einem Reservoir zur Schmiereinrichtung befördert. Das Schmiermittelversorgungssystem weist einen mit einem Schmiermittelzylinder zusammenwirkenden Zeit-Weg-gesteuerten Antrieb auf, wobei die Schmiermittelmenge über den Hub des Schmiermittelzylinders festgelegt ist. Die jeweilige Schmiermittelmenge wird lediglich über den Hub des Schmiermittelzylinders festgelegt und genau gesteuert, wobei dieser beispielsweise eine Schmiermittelmenge weniger als 5 ml und sogar bis unter 3 ml für im Regelfall einen Einspritzvorgang aufnehmen kann. Durch eine möglichst geringere Schmiermittelmenge ergibt sich dabei auch eine höhere Bauteilqualität des Druckgussteils.

In der Druckschrift DE 42 43 827 A1 ist eine Schmiermittelzuführung einer Gießkolbenschmierung einer Druckgießmaschine beschrieben. Zur Schmierung des Gießkolbens weist die Gießkolbenstange Zuführleitungen für ein Schmiermittel und für Druckluft zur Schmiermittelzerstäubung auf. Im vorderen Bereich der Kolbenstange ist hinter dem Gießkolben ein Schmiermittel-Auftragskörper mit einer Vielzahl von radialen Austrittbohrungen für Schmiermittel und Druckluft angeordnet. Dabei ist auf der Kolbenstange ein Führungskörper vorgesehen, der die radial austretende Druckluft in axiale Richtung umlenkt. Insgesamt ist somit ein mit einem Gießkolben mitbewegter Schmiermittel-Auftragskörper vorgesehen, aus dem Schmiermittel zunächst radial austritt und mittels Druckluft axial in Richtung Gießkolbenrückseite zerstäubt. Die Schmiermittelmenge ist bei dieser Konstruktion jedoch nicht auf ein Minimum reduziert, da zur Abfuhr von überschüssigem Schmiermittel eine Nut mit Abführleitungen in der Kolbenstange vorgesehen ist.

Zudem ist aus der Druckschrift DE 21 62 186 A eine automatische Sprühölschmierung für den Presskolben einer Kaltkammer-Druckgießmaschine bekannt. Die Schmiermittelzufuhr erfolgt aus einem Schmiermittelvorrat über in Längsrichtung durch die Kolbenstange verlaufende Kanäle hin zu Spritzdüsen, welche in gleichen Winkelabständen umlaufend unmittelbar hinter dem Presskolben bzw. Gießkolben angeordnet sind. Die Spritzdüsen sind auf die Innenwandung der Gießbuchse bzw. Füllkammer gerichtet. Auf diese Weise wird das Schmiermittel durch die Kolbenstange direkt auf die Innenwandung der Gießkammer aufgebracht und durch die Bewegung des Gießkolbens gleichmäßig über die gesamte Länge der Gießkammer verteilt. Der automatisierte Sprühölauftrag erfolgt während der Rückführung des Presskolbens.

Der Erfindung liegt die Aufgabe zugrunde, eine Druckgussvorrichtung weiterzuentwickeln, um bezüglich der Schmiermittelmenge einen möglichst effizienten Einsatz von Schmiermittel zu erzielen.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt eine Druckgussvorrichtung mit einer Füllkammer und einem Druckgießkolben mit Kolbenstange ein, welche verschiebbar in der Füllkammer angeordnet sind, wobei die Kolbenstange und der Druckgießkolben eine Schmiereinrichtung mit zumindest einem Druckluftkanal und zumindest einem Schmiermittelkanal aufweisen, über den Schmiermittel zum Druckgießkolben befördert werden kann, wobei der Druckgießkolben um den Außenumfang mehrere Schmieröffnungen aufweist, über die in einen zwischen der Außenoberfläche des Druckgießkolbens und der Innenoberfläche der Füllkammer befindlichen Bereich Schmiermittel eingebracht werden kann. Des Weiteren umfasst die Druckgussvorrichtung ein Schmiermittelversorgungssystem, welches Schmiermittel bereitstellt. Die Schmieröffnungen im Druckgießkolben sind als Schmierdüsen mit einem Abstrahlwinkel α ausgebildet. Der Neigungswinkel β der Symmetrieachse des Sprühstrahls einer Schmierdüse beträgt für das Schmiermittel relativ zur Kolbenlängsachse zwischen 30° und 85°.

Die Erfindung geht dabei von der Überlegung aus, dass zur Schmierung einer Füllkammer und des zugehörigen Druckgießkolbens eine weiterentwickelte Schmiereinrichtung eingesetzt wird, wobei mit möglichst wenig Schmiermittel eine sichere und verschleißarme Schmierung der Kolbenoberfläche und der Füllkammerinnenwand als Reibpaarung gewährleistet ist. Hierbei wird eine vordefinierte Schmiermittelmenge über ein Schmiermittelversorgungssystem bereitgestellt, welches an den zumindest einen Druckluftkanal und zumindest einen Schmiermittelkanal an der Kolbenstange angeschlossen ist. Die Anschlüsse können dabei vorzugsweise am hinteren Ende der Kolbenstange angebracht sein, wo die Zuleitung des Schmiermittels sowie auch gegebenenfalls des Kühlmittels baulich keine Probleme bereitet und die Kolbenbewegung nicht behindert wird.

Gemäß der Erfindung ist zumindest eine der Schmierdüsen druck- und schmiermitteldicht verschließbar. Bei der Verwendung einer größeren Anzahl an Schmierdüsen müssen bei manchen speziellen Bauformen oder Betriebsbedingungen nicht alle zur Verfügung stehenden Schmierdüsen eingesetzt werden. In manchen Fällen kann die Anzahl der einsatzbereiten Düsen durch ein Verschließen ausgewählter Düsen reduziert werden und die Charakteristik der Kolbenschmierung an einen sich verändernden Bedarf angepasst werden. Dies erhöht auch die Variabilität der gesamten Anlage.

Hierdurch lassen sich sowohl durch den Schmiermittelfluss als auch durch die Einwirkung der Druckluft unterschiedlich mit Schmiermittel belegte Abschnitte entlang der Druckgießkolbenführung zur Erzielung einer optimalen Schmierung realisieren. Beispielsweise wird das Schmiermittel aus einem Reservoir des Schmiermittelversorgungssystems entnommen und anschließend über eine entsprechende Ventilsteuerung in die Kolbenstange und den darauffolgenden Druckgießkolben eingebracht.

Die Schmieröffnungen sind im Druckgießkolben als Schmierdüsen mit einem definierten Abstrahlwinkel α ausgeführt. Der Abstrahlwinkel α gibt die Öffnungsweite des Sprühstrahlkegels geometrisch vor. Im Zusammenspiel mit dem Neigungswinkel β der Symmetrieachse des Sprühstrahls einer Schmierdüse relativ zur Kolbenlängsachse in einem Bereich zwischen 30° und 85° kann die Abstrahlcharakteristik für das Schmiermittel präzise eingestellt werden.

Des Weiteren sorgt eine Druckluftversorgungseinrichtung dafür, dass die für einen Arbeitszyklus vorgesehene Schmiermittelmenge über die Schmierdüsen im Druckgießkolben zerstäubt und damit gleichmäßig auf der Innenoberfläche der Füllkammer aufgebracht wird. Jede Schmierdüse wird durch einen Druckluftkanal und einen Schmiermittelkanal versorgt. In der Kolbenstange und im Druckgießkolben können Hauptversorgungskanäle für Druckluft und Schmiermittel mit größerem Querschnitt verlaufen, die sich erst in der Nähe der Schmierdüsen entsprechend verzweigen.

Der Druckgießkolben kann mit der Kolbenstange bevorzugt mittels einer umgreifenden Haltemanschette fest und verdrehsicher verbunden sein. Die Verdrehsicherheit wirkt hierbei insbesondere in Umfangsrichtung gegen eine Lageänderung des Druckgießkolbens gegenüber der Füllkammerwand. Bevor sich durch ein Schließen der umgreifenden Haltemanschette eine feste und in Umfangsrichtung verdrehsichere Verbindung einstellt, kann der Druckgießkolben mit den Schmierdüsen gegenüber der Kolbenstange zuvor exakt ausgerichtet werden. Die Position und die Wirksamkeit der so justierten Schmierdüsen kann damit in Umfangsrichtung genau festgelegt werden. Die zu verbindenden Kolben und Stangenenden sind dazu jeweils mit einer umlaufenden Auskragung versehen, welche die Haltemanschette zum Formschluss umgreift. Druckgießkolben und Kolbenstange können jedoch ebenso gut miteinander verschraubt sein. An der gemeinsamen Kontaktfläche von Druckgießkolben und Kolbenstange gehen die Druckluftkanäle und Schmiermittelkanäle ineinander über. An der Kontaktfläche sind Dichtungsflächen ausgestaltet, die einen Druckluft- bzw. Schmiermittelübertritt verhindern.

Die Steuerung des Schmiervorgangs kann darauf basieren, dass von einer Steuereinheit ein Startsignal und ein Stoppsignal an das Schmiermittelversorgungssystem gesendet wird. In diesem Falle wird dann die Zeit zwischen Start und Stopp erfasst und entsprechend in diesem vorgegebenen Zeitraum in der gewünschten Menge dosiert. Die jeweilige Schmiermittelmenge wird pro Schuss in der Praxis einmal ausgewählt, wobei eine möglichst geringe Gesamtmenge von nur 0,3 bis 20 ml für einen Maschinenzyklus zur Verfügung gestellt wird. Das Einbringen des Schmiermittels auf die Innenoberfläche der Füllkammer einer Druckgussvorrichtung erfolgt über die am Außenumfang des Druckgießkolbens in axialer Richtung hinter der Gleitfläche angeordneten Schmierdüsen. Vorteilhaft ist, wenn die Schmierdüsen in axialer Richtung möglichst nahe an die Gleitfläche des Kolbens positioniert sind. Idealerweise sprühen die Schmierdüsen dann auf den Teil der Innenoberfläche der Füllkammer, der beim Zurückziehen des Kolbens von dessen Gleitfläche unmittelbar darauf überfahren wird.

Das Schmiermittel kann über die Schmierdüsen in einem umfänglich konstanten Schmiermittelstrom oder auch in einer Art und Weise eingebracht werden, dass über einem Druckgießkolbenhub die Menge lokal unterschiedlich verteilt wird. Eine ungleiche Verteilung kann erforderlich sein, wenn die Innenfläche der Füllkammer oder die Außenfläche des Druckgießkolbens in Abhängigkeit von den Gießparametern und dem Gießverlauf variabel geschmiert werden muss. Das Einspritzen des Schmiermittels erfolgt während des Herausziehens des Druckgießkolbens über ein vordefiniertes automatisiertes Ablaufschema, das maschinenseitig von einer entsprechenden Programmsteuerung abgearbeitet wird.

Der besondere Vorteil besteht darin, dass die Schmiermittelmenge sehr geringgehalten werden kann und genau dosiert auf der Innenoberfläche der Füllkammer in unmittelbarer Nähe der Gleitflächen verteilt wird. Durch eine präzise Steuerung kann damit auch der Schmiergrad während eines Maschinenzyklus noch variiert werden. Hierzu werden zur Bestimmung der Schmiermittelmenge keine weiteren Messeinrichtungen zur Prozessüberwachung benötigt. Durch eine möglichst geringere Schmiermittelmenge ergibt sich in Verbindung mit der optimierten Einbringung auch eine höhere Bauteilqualität des Gussteils. Trotz der vorgesehenen Verringerung des Schmiermitteleinsatzes pro Gießzyklus, können durch die erfindungsgemäße Vorrichtung dennoch lange Standzeiten der durch Abrieb belasteten Bauteile erzielt werden. Das im Betrieb über die Schmieröffnungen verteilte Schmiermittel wird bei der Bewegung des Kolbens in die Füllkammer eingebracht und über die gesamte Oberfläche der Innenwandung der Füllkammer verteilt, wodurch sich eine optimale Schmierung des Druckgusskolbens ergibt. Dadurch lässt sich sowohl die Lebensdauer des Kolbens als auch die der Füllkammer deutlich erhöhen.

In bevorzugter Ausgestaltung der Erfindung kann der Neigungswinkel β der Symmetrieachse des Sprühstrahls einer Schmierdüse für das Schmiermittel relativ zur Kolbenlängsachse zwischen 55° und 65° betragen. In Kolbenlängsachse betrachtet können bei einem Neigungswinkel β zwischen 55° und 65° die Schmierdüsen besonders nahe an die kolbenseitigen Gleitflächen heranrücken. Die unter diesem Winkelbereich entstehende Abstrahlcharakteristik der Schmierdüsen ermöglicht eine besonders kompakte Bauform der Kolbenrückseite mit einem sehr kurzen Anschlussstutzen als Zwischenstück zur Kolbenstange hin. Auf diese Weise lassen sich die Betriebsbedingungen zur Schmierung einer Druckgussvorrichtung weiter optimieren und ein stabiler Produktionsprozess mit hoher Prozesssicherheit erzielen.

Bevorzugt kann jede der Schmierdüsen verschließbar sein. Hierdurch ergibt sich eine freie Auswahl einer gewissen Anzahl nicht im Betrieb eingesetzter Schmierdüsen. In der Praxis sind durch die Anordnung der Schmierdüsen hinter den zumeist auswechselbaren Druckringen, Gleitbuchsen und Abstreifern, die Schmierdüsen im Bedarfsfall auch leicht zugänglich, ohne größere Umbaumaßnahmen vornehmen zu müssen. Sie können folglich im Bedarfsfall schnell geöffnet oder im Einsatz befindliche Düsen auch schnell verschlossen werden. Mit dieser Maßnahme können die sich im Betrieb zeitlich ändernden Verschleißbedingungen durch eine Verbesserung der lokalen Dosierung des Schmiermittels entsprechend berücksichtigt werden, wodurch sich die Standzeit der vom Verschleiß betroffenen einzelnen Bauteile wesentlich erhöhen lässt.

Vorteilhafterweise kann eine Schmierdüse mittels einer Gewindeschrauben druck- und schmiermitteldicht verschließbar sein. Die Gewindeschrauben können unter Verwendung von O-Ringe als Dichtungen die Schmierdüsen gegenüber einem Druckluft- und Schmiermittelaustritt vollkommen abdichten. Hierzu weisen die Düsen für die Gewindeschrauben geeignete Innengewinde auf.

In bevorzugter Ausgestaltung kann der Abstrahlwinkel α einer Schmierdüse kleiner als 30° sein. Je geringer der Abstrahlwinkel α ist, desto zielgerichteter gelangt das Schmiermittel auf die Innenoberfläche der Füllkammer in unmittelbarer Nähe hinter den Gleitflächen des Druckgießkolbens. Ziel ist es, möglichst die gesamte Schmiermittelmenge an den Gleitflächen zur Verfügung zu stellen und nicht an ungewünschten Flächen auf der Kolbenrückseite abzuscheiden.

Bei einer vorteilhaften Ausführungsform der Erfindung können der Neigungswinkel β der Symmetrieachse einer Schmierdüse und der Abstrahlwinkel α so gewählt sein, dass das Schmiermittel, geometrisch betrachtet, nur auf die Innenoberfläche der Füllkammer auftrifft. Hierdurch kann das Schmiermittel in dem zwischen dem Außenumfang des Druckgießkolbens und dem Innenumfang der Füllkammer befindlichen Bereich in der Menge lokal optimal eingebracht werden. Beim Betrieb einer Druckgussvorrichtung werden sowohl die Füllkammer wie auch der Druckgießkolben unterschiedlichen mechanischen und thermischen Belastungen ausgesetzt. Von diesen Belastungen abhängig sind auch die Reibverhältnisse der gegeneinander mechanisch bewegten Teile.

Vorteilhafterweise kann ein Schmiermittelversorgungssystem eine Schmiermittelmenge von maximal 20 ml zur Verfügung stellen. Eine bevorzugte Menge kann unter 15 ml liegen. Die besonders bevorzugte Menge kann den Bereich zwischen 3 bis 10 ml pro Arbeitszyklus abdecken. Durch eine präzise Steuerung kann der Schmiergrad während eines Maschinenzyklus noch variiert werden. So kann die Schmiermittelmenge genau dosiert und in einem möglichst geringen Anteil in die Druckgussvorrichtung mit einer gezielten Mengenverteilung eingebracht werden.

Bei einer vorteilhaften Ausführungsform der Erfindung kann der Druckgießkolben mit der Kolbenstange mittels einer umgreifenden Haltemanschette verdrehsicher verbunden sein. Die Haltemanschette kann aus zwei Halbschalen gebildet sein, welche über ein Scharnier öffenbar sind. Im geschlossenen Zustand umgreift die Manschette sowohl das jeweilige Ende des Druckgießkolbens als auch das der Kolbenstange. Für eine verdrehsichere Verbindung wird die Haltemanschette durch eine dem Scharnier gegenüberliegende Verschraubung fest verschlossen, wodurch eine ausreichender Reibschluss in Umfangsrichtung erzielt werden kann. Eine Verdrehsicherung des Druckgießkolbens in Umfangsrichtung ist von Bedeutung, wenn beispielsweise einzelne Schmierdüsen verschlossen sind, um die Schmierwirkung zu optimieren. In diesem Fall muss gewährleistet sein, dass diese im Betrieb in Umfangsrichtung gegenüber der Füllkammer nicht ihre Lage verändern.

Zudem gehen an der gemeinsamen Kontaktfläche von Druckgießkolben und Kolbenstange die Druckluftkanäle und Schmiermittelkanäle ineinander über. Durch eine Verdrehsicherheit verbleiben die an den Dichtungsflächen ineinander übergehenden Kanäle für einen Mediendurchtritt sicher positioniert.

Vorteilhafterweise kann in radialer Richtung durch die umgreifende Haltemanschette hindurch eine Stiftsicherung als Verdrehsicherung angeordnet sein, welche sich am Druckgießkolben und/oder der Kolbenstange abstützt. Die Verdrehsicherung kann eine Schraube sein, welche radial durch eine Gewindebohrung in der Haltemanschette bis zum Druckgießkolben bzw. der Kolbenstange durchgreift und sich dort abstützt. Neben dem allein durch die Haltemanschette erzielten Reibschluss, kann durch eine Stiftsicherung zusätzliche Sicherheit gegenüber einem Verdrehen des Druckgießkolbens relativ zur Kolbenstange erzielt werden.

In bevorzugter Ausgestaltung können die zu verbindenden Enden des Druckgießkolbens und der Kolbenstange jeweils mit einer umlaufenden Auskragung versehen sein, welche die Haltemanschette in axialer Richtung zum Formschluss umgreift. Am Innenumfang der Haltemanschette ist dafür eine Nut ausgeführt, in welche entsprechende Auskragung am Kolbenstangenende und Auskragung am Trägerkörperende im geschlossenen Zustand eingreifen und so ein Formschluss in axialer Richtung ausgebildet wird.

Ausführungsbeispiele der Erfindung werden anhand der schematischen Zeichnungen näher erläutert.

Darin zeigt:
- Fig. 1: schematisch eine Seitenansicht einer Druckgussvorrichtung mit Druckgießkolben und Kolbenstange in einer Füllkammer,
- Fig. 2: schematisch einen Längsschnitt durch einen Trägerkörper eines Druckgießkolbens im Bereich einer Schmierdüse,
- Fig. 3: schematisch eine Schrägansicht eines Druckgießkolbens,
- Fig. 4: schematisch eine Schrägansicht einer Haltemanschette,
- Fig. 5: schematisch eine Seitenansicht einer Kolbenstange.

Einander entsprechende Teile sind in den Figuren mit denselben Bezugszeichen versehen.

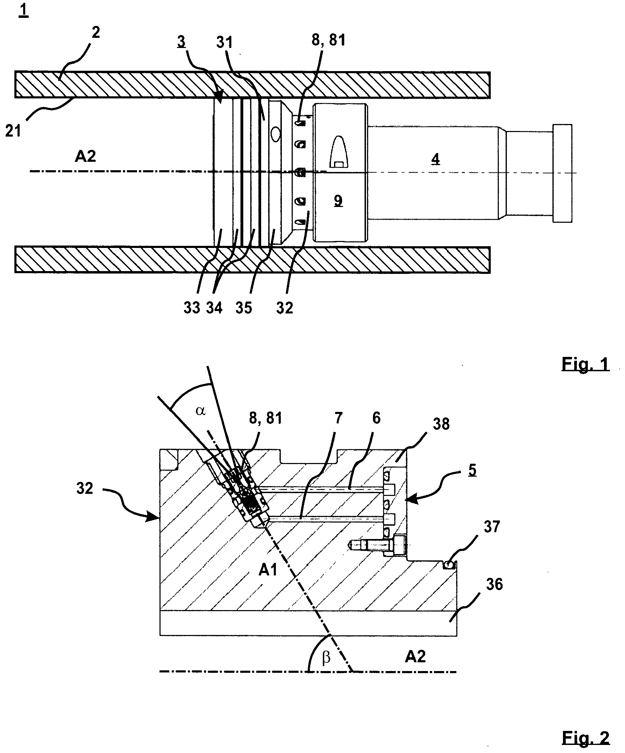

Die in Fig. 1 schematisch dargestellte Druckgussvorrichtung 1 umfasst einen Druckgießkolben 3, der mit einer Kolbenstange 4 mittels einer Haltemanschette 9 verbunden ist. Beide sind in einer Füllkammer 2 in Kolbenlängsachse A2 verschiebbar. Der Druckgießkolben 3 umfasst einen Trägerkörper 32, auf den in dieser Ausführungsform hohlzylindrische Gleitkörper 34 aufgeschoben sind. Die außen liegende Umfangsfläche der Gleitkörper 34 ist die Außenoberfläche 31 des Druckgießkolbens 3, welche an der Innenoberfläche der Füllkammer 21 entlanggleitet und als Reibpaarung geschmiert werden muss.

Zwischen der vorderen Stirnfläche des Trägerkörpers 32 und der vordersten Stirnfläche der Gleitkörper 34 ist auf dem Trägerkörper 32 ein Stirnring 33 als vorderseitiges Halteelement angeordnet, der bevorzugt aus einem härteren Material besteht als die Gleitkörper 34. Auf diese Weise werden die Gleitkörper 34 vor einem direkten Kontakt mit dem heißen Gießmaterial geschützt. Als zweites Halteelement für die Gleitkörper 34 mit rückseitigem Anschlag dient ein Montagering 35, an dem die rückwärtige Stirnseite eines hohlzylindrischen Gleitkörpers 34 flächig anliegt. In seiner radialen Ausdehnung ist der Montagering 35 bevorzugt etwas kleiner als die radiale Ausdehnung der Gleitkörper 34.

Der Druckgießkolben 3 weist um den Außenumfang im hinteren Bereich des Trägerkörpers 32 mehrere Schmieröffnungen 8 auf, über die in einen zwischen der Außenoberfläche 31 des Druckgießkolbens 3 und der Innenoberfläche 21 der Füllkammer 2 befindlichen Bereich Schmiermittel eingebracht werden kann.

Die Schmieröffnungen 8 im Druckgießkolben 3 sind als Schmierdüsen 81 mit einem vorbestimmten Abstrahlwinkel und Neigungswinkel ausgebildet.

Fig. 2 zeigt schematisch einen Längsschnitt durch einen Teil des Trägerkörpers 32 eines Druckgießkolbens 3 im Bereich einer Schmierdüse 81 als Schmieröffnung 8. Die Schmierdüsen 81 sind durch einen Abstrahlwinkel α charakterisiert, der die öffnungsweite des Sprühstrahlkegels geometrisch vorgibt. Der Neigungswinkel β der Symmetrieachse A1 des Sprühstrahls einer Schmierdüse 81 beträgt für das Schmiermittel relativ zur Kolbenlängsachse A2 zwischen 30° und 85°. Die Abstrahlcharakteristik für das Schmiermittel ist im Wesentlichen durch diese zwei Winkelbeziehungen vorgegeben. Zu jeder Schmierdüse 81 der Schmiereinrichtung 5 führt ein Druckluftkanal 6 und ein Schmiermittelkanal 7.

Über eine Druckluftversorgungseinrichtung wird mittels Druckluft über den Druckluftkanal 6 die für einen Arbeitszyklus vorgesehene Schmiermittelmenge aus dem Schmiermittelkanal 7 über die Schmierdüsen 81 im Druckgießkolben zerstäubt und damit gleichmäßig auf der Innenoberfläche der Füllkammer aufgebracht. In der Kolbenstange und im Druckgießkolben können in der Fig. 2 nicht weiter dargestellte Hauptversorgungskanäle für Druckluft und Schmiermittel mit größerem Querschnitt verlaufen, die sich erst in der Nähe der Schmierdüsen 81 entsprechend verzweigen. Jede Schmierdüse ist mittels einer Gewindeschraube druck- und schmiermitteldicht verschließbar. Die Gewindeschrauben können unter Verwendung von Dichtungen die Schmierdüsen gegenüber einem Druckluft- und Schmiermittelaustritt vollkommen abdichten.

Um einen Druckgießkolben 3 effektiv zu Kühlen verläuft zentral im Trägerkörper 32 ein Kühlkanal 36. Folglich werden ganz unterschiedliche Medien wie Schmiermittel, Druckluft und Kühlwasser mittels Kanäle im Trägerkörper 32 geführt. An der gemeinsamen Kontaktfläche von Druckgießkolben und Kolbenstange gehen jeweils die Druckluftkanäle und Schmiermittelkanäle ineinander über. An den Kontaktfläche sind Dichtungsflächen ausgestaltet bzw. Dichtringe 37 positioniert, die einen Druckluft-, Schmiermittel- oder Kühlwasserübertritt verhindern.

Der Druckgießkolben ist mit der Kolbenstange mittels einer umgreifenden Haltemanschette fest verbunden. Die in Fig. 2 dargestellte umlaufende Auskragung 38 dient kolbenseitig als Formelement, welche die Haltemanschette zum Formschluss umgreift und mit der Kolbenstange verbindet.

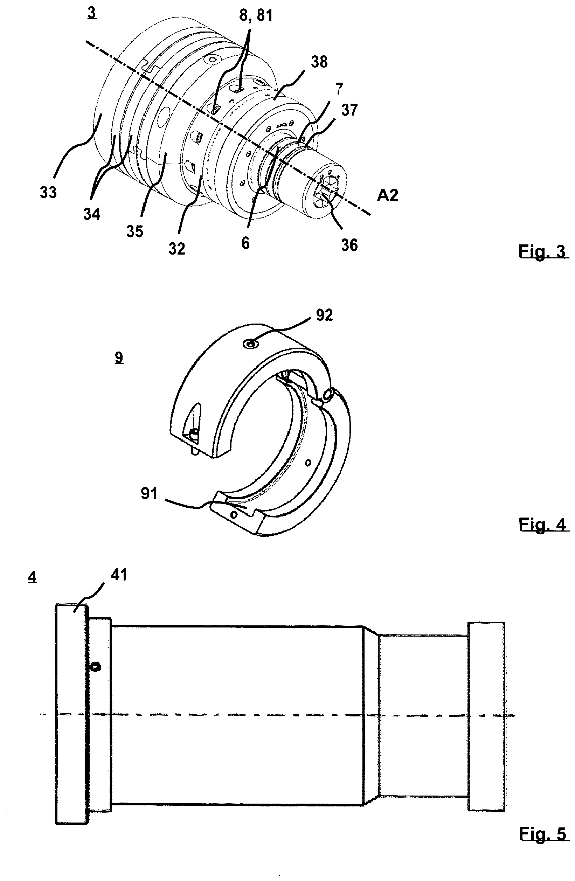

Fig. 3 zeigt schematisch eine Schrägansicht der Rückseite eines Druckgießkolbens 3. Auf dem Trägerkörper 32 ist von der Stirnseite her betrachtet in Kolbenlängsachse A2 ein Stirnring 33 als vorderseitiges Halteelement, mehrere hohlzylindrische Gleitkörper 34 sowie ein Montagering 35 als zweites Halteelement für die Gleitkörper 34 montiert.

Unmittelbar hinter dem Montagering 35 weist der Druckgießkolben 3 um den Außenumfang im hinteren Bereich des Trägerkörpers 32 mehrere Schmierdüsen 81 als Schmieröffnungen 8 auf. Die Schmierdüsen 81 sind mit einem definierten Abstrahlwinkel und Neigungswinkel montiert, so dass das Schmiermittel, geometrisch betrachtet, nur auf die Innenoberfläche der Füllkammer auftrifft. Aus der zunächst rein geometrischen Betrachtung wird in der Praxis der Sprühstrahl mit seinem Strahlkegel etwas nach vorne gerichtet, so dass der Hauptanteil des Schmiermittels unmittelbar hinter dem Montagering 35 auf die Innenoberfläche der Füllkammer auftrifft.

Die unter diesem Winkelbereich entstehende Abstrahlcharakteristik der Schmierdüsen ermöglicht eine besonders kompakte Bauform der Kolbenrückseite mit einem sehr kurzen Anschlussstutzen des Trägerkörpers 32 als Zwischenstück zur Kolbenstange hin. Auf diese Weise lassen sich die Betriebsbedingungen zur Schmierung einer Druckgussvorrichtung weiter optimieren und ein stabiler Produktionsprozess mit hoher Prozesssicherheit erzielen.

Jede Schmierdüse wird durch einen Druckluftkanal 6 und einen Schmiermittelkanal 7 versorgt. In der Kolbenstange und im Druckgießkolben 3 können Hauptversorgungskanäle für Druckluft und Schmiermittel mit größerem Querschnitt verlaufen, die sich erst in der Nähe der Schmierdüsen entsprechend verzweigen.

In Richtung der Kolbenlängsachse A2 befindet sich auch ein zentral im Trägerkörper 32 verlaufender Kühlkanal 36, der im stirnseitigen Bereich des Druckgießkolbens 3 eine Kühleinrichtung mit Kühlfluid versorgt. Zwischen Druckluftkanal 6, Schmiermittelkanal 7 und Kühlkanal 36 sind umfänglich jeweils Dichtungsringe 37 angeordnet, welche dafür sorgen, dass die Medien zur Kühlung und Schmierung getrennt bleiben.

Die umlaufende Auskragung 38 dient kolbenseitig als Formelement, welche die Haltemanschette zum Formschluss umgreift und mit der Kolbenstange verbindet.

Fig. 4 zeigt schematisch eine Schrägansicht einer Haltemanschette 9 zur festen und verdrehsicheren Verbindung von Druckgießkolben und Kolbenstange. Die Haltemanschette 9 ist aus zwei Halbschalen gebildet, welche über ein Scharnier öffenbar sind. Im geschlossenen Zustand umgreift die Manschette sowohl das jeweilige Ende des Druckgießkolbens und der Kolbenstange. Fest verschlossen wird die Haltemanschette 9 durch eine dem Scharnier gegenüberliegende Verschraubung. In radialer Richtung durch die umgreifende Haltemanschette hindurch ist eine Stiftsicherung 92 als Verdrehsicherung angeordnet. Die Stiftsicherung 92 ist eine Schraube, welche im montierten Zustand radial durch eine Gewindebohrung in der Haltemanschette bis zum Druckgießkolben bzw. der Kolbenstange durchgreift und sich dort abstützt.

Am Innenumfang der Haltemanschette 9 ist eine Nut 91, in welche die in Fig. 5 dargestellte Auskragung 41 am Kolbenstangenende und die in Fig. 3 dargestellte Auskragung 38 am Trägerkörperende im geschlossenen Zustand eingreifen und so ein Formschluss gebildet wird.

Fig. 5 zeigt schematisch eine Seitenansicht einer Kolbenstange 4. In der Kolbenstange verlaufen die in der Fig. 5 nicht weiter dargestellten Versorgungskanäle für Druckluft, Schmiermittel sowie Kühlmedium mit größerem Querschnitt, die den Druckgießkolben mit den im Betrieb benötigten Medien versorgt.

Die umlaufende Auskragung 41 an einem Stangenende dient als Formelement, welche die in Fig. 4 dargestellte Haltemanschette 9 zum Formschluss umgreift und mit der Druckgießkolben verbindet.

### Bezugszeichenliste

- 1: Druckgussvorrichtung
- 2: Füllkammer
- 21: Innenoberfläche der Füllkammer
- 3: Druckgießkolben
- 31: Außenoberfläche des Druckgießkolbens
- 32: Trägerkörper
- 33: Stirnring
- 34: hohlzylindrischer Gleitkörper
- 35: Montagering
- 36: Kühlkanal
- 37: Dichtungsring
- 38: Auskragung
- 4: Kolbenstange
- 41: Auskragung
- 5: Schmiereinrichtung
- 6: Druckluftkanal
- 7: Schmiermittelkanal
- 8: Schmieröffnung
- 81: Schmierdüse
- 9: Haltemanschette
- 91: Nut
- 92: Stiftsicherung
- α: Abstrahlwinkel
- β: Neigungswinkel
- A1: Symmetrieachse Schmierdüse
- A2: Kolbenlängsachse

## Patentansprüche

1. Druckgussvorrichtung (1) mit einer Füllkammer (2) und einem Druckgießkolben (3) mit Kolbenstange (4), welche verschiebbar in der Füllkammer (2) angeordnet sind, wobei die Kolbenstange (4) und der Druckgießkolben (3) eine Schmiereinrichtung (5) mit zumindest einem Druckluftkanal (6) und zumindest einem Schmiermittelkanal (7) aufweisen, über den Schmiermittel zum Druckgießkolben (3) befördert werden kann, wobei der Druckgießkolben (3) um den Außenumfang mehrere Schmieröffnungen (8) aufweist, über die in einen zwischen der Außenoberfläche (31) des Druckgießkolbens (3) und der Innenoberfläche (21) der Füllkammer (2) befindlichen Bereich Schmiermittel eingebracht werden kann, wobei
die Schmieröffnungen (8) im Druckgießkolben (3) als Schmierdüsen (81) mit einem Abstrahlwinkel α ausgebildet sind, und
der Neigungswinkel β der Symmetrieachse (A1) des Sprühstrahls einer Schmierdüse (81) für das Schmiermittel relativ zur Kolbenlängsachse (A2) zwischen 30° und 85° beträgt,
**dadurch gekennzeichnet,**
**dass** zumindest eine der Schmierdüsen (81) druck- und schmiermitteldicht verschließbar ist.

2. Druckgussvorrichtung (1) nach Anspruch 1, **dadurch gekennzeichnet, dass** der Neigungswinkel β der Symmetrieachse (A1) des Sprühstrahls einer Schmierdüse (81) für das Schmiermittel relativ zur Kolbenlängsachse (A2) zwischen 55° und 65° beträgt.

3. Druckgussvorrichtung (1) nach Anspruch 1 oder 2, **dadurch gekennzeichnet, dass** jede der Schmierdüsen (81) verschließbar ist.

4. Druckgussvorrichtung (1) nach einem der Ansprüche 1 bis 3, **dadurch gekennzeichnet, dass** eine Schmierdüse (81) mittels einer Gewindeschraube druck- und schmiermitteldicht verschließbar ist.

5. Druckgussvorrichtung (1) nach einem der Ansprüche 1 bis 4, **dadurch gekennzeichnet**, der Abstrahlwinkel α einer Schmierdüse (81) kleiner als 30° ist.

6. Druckgussvorrichtung (1) nach einem der Ansprüche 1 bis 5, **dadurch gekennzeichnet, dass** der Neigungswinkel β der Symmetrieachse (A1) einer Schmierdüse (81) und der Abstrahlwinkel α so gewählt ist, dass das Schmiermittel, geometrisch betrachtet, nur auf die Innenoberfläche (21) der Füllkammer (2) auftrifft.

7. Druckgussvorrichtung (1) nach einem der Ansprüche 1 bis 6, **dadurch gekennzeichnet, dass** ein Schmiermittelversorgungssystem eine Schmiermittelmenge von maximal 20 ml pro Arbeitszyklus zur Verfügung stellt.

8. Druckgussvorrichtung (1) nach einem der Ansprüche 1 bis 7, **dadurch gekennzeichnet, dass** der Druckgießkolben (3) mit der Kolbenstange (4) mittels einer umgreifenden Haltemanschette (9) verdrehsicher verbunden ist.

9. Druckgussvorrichtung (1) nach Anspruch 8, **dadurch gekennzeichnet, dass** in radialer Richtung durch die umgreifende Haltemanschette (9) hindurch eine Stiftsicherung (92) als Verdrehsicherung angeordnet ist, welche sich am Druckgießkolben (3) und/oder der Kolbenstange (4) abstützt.

10. Druckgussvorrichtung (1) nach Anspruch 8 oder 9, **dadurch gekennzeichnet, dass** die zu verbindenden Enden des Druckgießkolbens (3) und der Kolbenstange (4) jeweils mit einer umlaufenden Auskragung (38, 41) versehen sind, welche die Haltemanschette (9) in axialer Richtung zum Formschluss umgreift.
